# EUROPEAN PATENT SPECIFICATION

(11) **EP 1 942 748 B1**
(45) Date of publication and mention of the grant of the patent: **18.02.2015**
(21) Application number: 06805969.0
(22) Date of filing: 29.09.2006
(51) Int. Cl.: A23L 1/227, A23L 1/32, A23J 3/34, A23J 3/14, A23L 1/305, A23J 3/32

(54) **HYDROLYSIS OF VEGETABLE PROTEINS**
HYDROLYSE VON PFLANZLICHEN PROTEINEN
HYDROLYSE DE PROTÉINES VÉGÉTALES

(30) Priority: 30.09.2005 EP 05256156
(43) Date of publication of application: 16.07.2008
(73) Proprietor: Oterap Holding B.V., 1507 BR Zaandam (NL)
(72) Inventor: VAN KOEVERINGE, Jan Marcus, NL-1508 AW Zaandam (NL); TEN HAAF, Lambert A. M., NL-1312 ER Almere (NL)
(74) Representative: Potter Clarkson LLP
(86) International application number: PCT/EP2006/009493
(87) International publication number: WO 2007/039253

(56) References cited:
- EP-A- 0 271 964
- WO-A-01/39607
- DATABASE WPI Section Ch, Week 198724 Derwent Publications Ltd., London, GB; Class B04, AN 1987-168482 XP002358241 & SU 1 081 843 A (ROST ANTI-PLAGUE) 7 November 1986 (1986-11-07)

## Description

This invention relates to the hydrolysis of vegetable proteins. In particular, the invention relates to a hydrolysed vegetable protein, to a composition comprising the hydrolysed vegetable protein (including a food product), to a process for producing the hydrolysed vegetable protein and to certain uses of the hydrolysed vegetable protein.

Hydrolysed vegetable proteins are useful components of many food products. They are typically used to improve the flavour of a range of different food products, especially savoury products. In addition to modifying the flavour of the product, hydrolysed vegetable proteins can also contribute to beneficial odour/aroma properties of the product. Hydrolysed vegetable proteins also increase the nutritional value of some products since they tend to be more soluble than the unhydrolysed proteins and are generally more easily absorbed in the digestive tract.

Processes for hydrolysing proteins typically fall into two categories: enzymatic hydrolysis and chemical hydrolysis. The products of the process, the hydrolysed vegetable proteins, generally comprise mixtures of shorter chain proteins, peptides and amino acids.

GB 791,180 relates to methods of producing dry, stable Vitamin A and/or D preparations. The preparations described may contain protein concentrates comprising sunflower seed meal together with other proteins. However, the protein concentrates are simple mixtures.

US 5,180,597 describes a process for the production of hydrolysed vegetable proteins using gaseous hydrochloric acid. The aim of the process described is to reduce the levels of monochlorodihydroxypropanols (MCDPs) in the product. The hydrolysis is carried out using a protease enzyme and, although oilseed proteins are mentioned, the preferred protein is wheat gluten.

US 6,838,100 relates to a process for the production of a cultured savoury base by hydrolysing a protein-containing material using a combination of at least one enzyme and at least one bacterial strain. The protein may be of plant or animal origin and wheat gluten is used in the examples.

US 6,036,983 discloses a method of obtaining protein hydrolysates, which comprises a deamidation step. The protein used as the starting material for the process may be of vegetable or animal origin.

Gopalkrishnan et al in J Food Sci Technol, 2000, Vol 37, No 3, 319-322 describes the optimum time requirements for enzymatic hydrolysis of food proteins.

Bautista et al, JAOCS, Vol 77, no 2, 2000, 121-126 and Villanueva et al, JAOCS, Vol 76, no 12, 1999, 1455-1460 disclose the use of sunflower protein hydrolysates for the dietary treatment of patients with liver failure and the peptide characteristics of sunflower protein hydrolysates.

EP-A-0271964 discloses a method for preparing protein hydrolysates soluble at acid pH, by enzymatic hydrolysis implemented at a pH of between 6.0 and 9.0 followed by acidification to the pH for minimum solubility of the intact starting proteins where acidification is effected by certain specific means.

Many commercially available hydrolysed vegetable proteins are currently based on soya. Soya increasingly has problems as a raw material because it is an allergen. Soya is also linked with genetic modification (GMO) and, as such, can be undesirable in certain markets.

There remains a need for hydrolysed vegetable proteins that overcome the problems mentioned above with soya and which may have other advantages. In particular, there is a need for hydrolysed vegetable proteins that have an improved aroma and/or flavour compared to conventional products. There is also a need for improved processes for producing hydrolysed vegetable proteins.

According to the present invention, there is provided a process as defined in the appended Claim 1.

The product is a hydrolysed vegetable protein (sometimes also referred to as a vegetable protein hydrolysate). The term "hydrolysed vegetable protein" has an accepted meaning in the art and generally refers to a composition comprising products of the hydrolysis of vegetable protein, together with other components derived from the starting material that is used to form the composition.

The starting material for hydrolysis that is used to form the hydrolysed vegetable protein of the invention comprises sunflower protein. The source of sunflower protein may be any proteinaceous part of a sunflower plant and is preferably sunflower seeds or a product or derivative obtained from sunflower seeds. The protein content of the sunflower seeds (or product or derivative thereof) is generally greater than 20%, preferably between 25 and 50% most preferably between 30 and 40% by weight. The sunflower protein may undergo one or more processing steps prior to use as the starting material in the invention, such as chemical and/or physical processing steps. A preferred chemical step comprises defatting, namely reducing the fat content of the material. Another optional (and less preferred) chemical treatment is a partial hydrolysis (or pre-hydrolysis) by enzymatic or chemical methods. A preferred physical step comprises reducing the size of the material e.g., by grinding. The most preferred source of the sunflower protein is defatted sunflower seeds.

The sunflower protein is used in the starting material for hydrolysis in the form of a mixture with at least one other vegetable protein which comprises maize protein, rape protein or a mixture thereof. Maize protein and rape protein may be used singly or as a mixture. The most preferred vegetable protein for use with sunflower protein in the invention is maize protein, preferably having a protein content of 30 to 80 % by weight, such as 50 to 70 % by weight. The maize protein may undergo one or more processing steps, prior to use as starting material in the invention, such as chemical and/or physical processing steps (e.g., defatting and/or pre-hydrolysis and/or grinding, in a similar manner as for sunflower protein). The mixture that is hydrolysed may optionally contain other components such as other protein sources (including animal, yeast and/or vegetable proteins). However, animal and yeast protein is preferably substantially absent and, if present, is preferably present in an amount of less than 10 % by weight of the mixture (on a dry basis).

The weight ratio of sunflower protein to the at least one other vegetable protein in the mixture is from 95 - 5 to 5 - 95, preferably from 80 - 20 to 20 - 80, most preferably from 75 - 25 to 25 - 75. Even more preferably, the weight ratio of sunflower protein to the at least one other vegetable protein is in the range of from 5:1 to 2:1, such as from 4:1 to 5:2, for example about 3:1. The most preferred weight ratio of sunflower protein to the at least one other vegetable protein in the mixture is from 3:1 to 1:1, such as about 2:1.

The hydrolysis of the invention may be carried out enzymatically, for example using one or more protease enzymes, or non-enzymatically, for example by acid or base catalysed hydrolysis. Preferably, the process is carried out non-enzymatically. The most preferred process involves hydrolysis in the presence of an acid, such as an inorganic acid. The preferred acid is hydrochloric acid, either alone or together with one or more organic or other inorganic acids. The pH of the reaction may be maintained constant or allowed to vary during the hydrolysis.

The hydrolysis is preferably carried out in the presence of water. The process is typically carried out at an elevated temperature, such as from 40° C to 180° C (more preferably from 60° C to 140° C, e.g., from 100° C to 140° C). If the process is carried out at a temperature above the boiling point of water in the system, it will typically also be carried out at an elevated pressure. Suitable apparatus for carrying out the process at elevated pressure, for example an autoclave, is well known in the art. The process is typically carried out for a period of from 1 to 24 hours, such as from 2 to 20 hours or from 5 to 15 hours. After the hydrolysis has proceeded to the desired extent, the reaction mixture is treated with a base (preferably sodium hydroxide), in order to increase the pH. A suitable pH after treatment with base is generally in the range of from 4 to 7.

After adjustment of the pH by treatment with the base, the reaction mixture is preferably filtered and optionally dried. When the dried product is a solid, it may be converted to a powder form.

The mixture that is hydrolysed in the process of the invention comprises sunflower protein, the other vegetable protein and, preferably, the acid. The mixture is typically stirred to form a substantially homogeneous dispersion or slurry. It has been found that adding the mixture of proteins to water (optionally containing the acid) to form the aqueous slurry is advantageously carried out in at least two batches in separate first, second and optional subsequent steps.

The hydrolysed vegetable protein of the invention preferably has a dry matter content by weight of at least 20%, preferably between 30 and 99.5%. The level of MCDPs in the hydrolysed vegetable protein is preferably less than 50 ppb, more preferably less than 20 ppb. This level of MCDPs is preferably achieved by the further step in a separate reactor, after the step of adjustment of the pH of the reaction mixture with a base (e.g., to from 4 to 7), of increasing the pH (more preferably to from 7 to 12, such as from 7 to 9) and maintaining the mixture at this higher pH and elevated temperature for a sufficient time to reduce the level of MCDPs, as described in WO 01/39607, for example. Following this step of reducing the level of MCDPs, the pH is typically lowered to from 4 to 7.

The hydrolysed vegetable protein of the invention may take any physical form but is preferably in the form of a powder or a paste or a liquid.

The hydrolyed vegetable protein of the invention is preferably suitable for vegetarians (i.e., free of animal products and not derived from animal products). The product may also be non-GMO (i.e., not derived from genetically modified crops). The product is typically free of allergens, according to EC Directive 2000/13, as amended by Directive 2003/89.

The hydrolysed vegetable protein of the invention may be used to improve the organoleptic properties, such as aroma and/or flavour and/or mouthfeel, of a product. Therefore, the hydrolysed vegetable protein may be employed by itself or together with one or more other flavours (i.e., flavouring agents) and/or fragrances (i.e., odour-imparting agents). Preferably, when the hydrolysed vegetable protein is used in this way, it is used as a composition comprising the hydrolysed vegetable protein and one or more components selected from aromas, flavours, spices and mixtures thereof.

A preferred use of the hydrolysed vegetable protein is as a component of a food product The food product may be adapted for humans or animals (e.g., cats or dogs). The most preferred food products are savoury products including dry products such as instant soups, soups, sauces, meat products, snackfoods such as crisps and ready meals such as pasta based meals. The food products will generally comprise one or more further edible components, such as fats (triglycerides) (e.g., in an amount of from 1 % to 50 % by weight) and/or carbohydrates (e.g., in an amount of from 1 % to 50 % by weight), and they may also contain typical components of food products, such as preservatives and/or colouring agents.

It has surprisingly been found that by using sunflower protein in combination with another source of vegetable protein, according to the invention, the product has excellent flavour characteristics. Also, the process for producing the product is easier to operate than closely related processes using different materials. Moreover, the process can provide a good yield of the hydrolysed vegetable protein based on starting material.

The following non-limiting examples illustrate the invention and do not limit its scope in any way. In the examples and throughout this specification, all percentages, parts and ratios are by weight unless indicated otherwise.

### Examples

### Raw materials

Defatted Sunflower seeds (SF) (32.5% protein)
Defatted rape seeds (Rape; RP) (35% protein)
Hydrochloric Acid (30%)
Sodium hydroxide (30%)
Maize protein (60% Protein)

### Example 1

| **Composition** | **Total Weight(kg)** | **% Protein** |
|---|---|---|
| 33%maize/67%SF | 133 | 42 |
| 100%SF | 133 | 34 |
| 100% Rape | 133 | 34 |
| 33%maize/67RP | 133 | 42 |

### Processing

The autoclave had a capacity of 3501, could be operated at a maximum pressure of 1.9 bar, and was equipped with a mixer.

The autoclave was filled with a mixture of 131 kg of 30% hydrochloric acid and 50 kg of water. The resulting solution was warmed under mixing to a temperature of 60°C. 67% of the protein based material was then slowly added to the autoclave. The mixture was stirred for four hours to make a homogeneous dispersion. The remaining 33% of the protein based material was then added to the autoclave.

The autoclave was closed and under mixing the contents were heated to 125°C. The autoclave was held at 125°C for 9 hr. By releasing gas, the pressure was held at a maximum of 1.9 bar.

The autoclave was cooled to 90°C and the pressure was brought back to atmospheric. Sodium hydroxide was then slowly added (over a period of approx. 2 hr) until the pH reached 5.2. The reaction mixture was filtered on the laboratory scale using a vacuum filter.

The liquid aromas were evaluated by an expert panel.

### Results

The aromas from the above experiments were compared by an expert panel with a standard commercial product based on Soya. The results were:

| **Composition** | **Form** | **Score** | **Remarks** |
|---|---|---|---|
| 33%maize/67%SF | Liquid | 5 | Mild, full flavour, meaty |
| 100%SF | Liquid | 2 | Bitter, dark, flat flavour |
| 100% Rape | Liquid | 3 | Average flavour, salty |
| 33%maize/67RP | Liquid | 4 | Full flavour, meaty, slightly acid |
| Commercial Soya Based product | Liquid | 2 | Flat flavour, slightly acid |

In the above evaluation 1= poor quality, and 5 = excellent quality

It can be seen that the best product from the sensory evaluation was based on 33%maize/67%SF.

### Example 2

### Protein Sources

33%maize/67%SF (1850 kg, otherwise as in Example 1)
33%maize/67RP (1850 kg, otherwise as in Example 1)

### Processing

The autoclave had a capacity of 40001, could be operated at a maximum pressure of 4.0 bar, and was equipped with a mixer.

The autoclave was filled with a mixture of 1850 kg of 30% hydrochloric acid and 750 kg of water. The resulting solution was warmed under mixing to a temperature of 80°C. 67% of the protein based material was then slowly added to the autoclave. The mixture was stirred for two hours to make a homogeneous dispersion. The remaining 33% of the protein based material was then added to the autoclave.

The autoclave was closed and under mixing the contents were heated to 135°C. The autoclave was held at 135°C for 6 hr. By releasing gas, the pressure was held at a maximum of 2.8 bar. The autoclave was cooled to 90°C and the pressure was brought back to atmospheric. The contents of the autoclave were pumped to a 20,0001 neutralisation vessel that was equipped with a mixer. Sodium hydroxide was then slowly added (over a period of approx. 2 hr) until the pH reached 5.2. The mixture was transferred to a separate reactor and the pH was then increased to 79 for at least 5 hours at 125°C. The mixture was cooled to 80 °C and the pH returned to 5.2 by the addition of hydrochloric acid. The contents of the reactor were filtered in a vacuum drum filter. After this step, the water content was reduced to approximately 20% in an evaporator at 200 mbar and a temperature of less than 80°C.

The liquid aromas were dried in vacuum drying ovens and then ground to powders. These powders were evaluated by an expert panel.

The process with the sunflower based proteins worked efficiently and without problems. In the case of the rape based protein products, there were problems involving the blockage of both pipe work and filters.

### Results

The dried powders from the two materials were evaluated by an expert panel and the results were as follows:

| **Composition** | **Form** | **Score** | **Remarks** |
|---|---|---|---|
| 33%maize/67%SF | Powder | 5 | mild, full flavour, meaty, slightly burned |
| 33%maize/67RP | Powder | 4 | mild, good flavour, meaty, slightly burned, slightly bitter |

In the above evaluation 1= poor quality, and 5 = excellent quality

Whilst the maize/rape product was not as good as the sunflower/maize product, it was still of good quality. However, GMO rape varieties are available and the amount of GMO rape is likely to increase. In addition, there were processing problems with the maize/rape product.

### Example 3

A hydrolysed sunflower/corn (maize) mixture according to the invention was compared with a mixture of hydrolysed sunflower and separately hydrolysed com. The ratio of sunflower to corn in the separately hydrolysed mixture is the same as the ratio of sunflower to corn in the product of the invention.

Samples of the product of the invention and the separately hydrolysed mixture were evaluated by a taste panel.

The following powder samples were evaluated by the taste panel:
1. Hydrolyzed vegetable protein (100% com), this one will be used as reference for the corn hydrolysis.
2. Pure sunflower hydrolysate.
3. Sunflower / corn hydrolysate.
4. Mixture of sunflower / corn hydrolysates (samples 1 and 2 mixed in same ratio as in 3).

The comments of the taste panel are set out in the following table:

| Sample Nr. | Tastepanel Member | | | | | **Taste Ranking** |
|---|---|---|---|---|---|---|
| | EB | GE | LH | EK | RW | |
| 1. | Bitter off note Dark taste burnt Very high Umami | Heavy bitter notes Ground notes | A little umami rotten off note | Dirty ground taste | Bitter, ground off note | **1** |
| 2. | Less bitter offnote Umami: higher than Nr. 1 | Softer then Nr. 1 Lightly burnt | Umami, light meaty notes | Bitter | Bitter | **3** |
| 3. | Softest product No off note A lot umami Lightly burnt taste | Soft and rounded Lightly burned | Umami, full, meaty Clean | Soft, friendly | Soft, nice in balance | **5** |
| 4. | Off note Lightly green notes (onion) | Off note, Ground taste dominates | Less umami Less meaty Dirty off note | Taste of corn dominates | Ground taste dominates | **3-4** |

Taste ranking scale : 1 = very poor, 5 = very good

### Results

The individual components both have a specific taste:
Corn: ground / soil
Sunflower: soft / round

In a mixture of corn and sunflower (separately hydrolysed and then mixed), the ground notes of the corn dominate. In the product of the invention, where corn and sunflower are mixed before hydrolysing, the sunflower dominates and gives the products a soft taste.

### Conclusion

The hydrolysed product according to the invention (Nr. 3) gives a nicer and rounder taste than the mixture (Nr. 4).

### Example 4

The following is an example of a rehydratable dried soup powder incorporating the hydrolysed vegetable protein of the invention:
50 g nonfat dry milk powder
20g cornstarch
2g dried minced onion
Ground black pepper - to taste
1g hydrolysed vegetable protein of the invention
0.5g dried herbs

The dried mixture is rehydrated using hot water and with stirring.

## Claims

1. Process for producing a hydrolysed vegetable protein comprising subjecting a mixture comprising sunflower protein and at least one other vegetable protein to hydrolysis, wherein the at least one other vegetable protein comprises maize protein, rape protein or a mixture thereof.

2. Process as claimed in Claim 1, wherein the mixture comprises sunflower protein and maize protein.

3. Process as claimed in any one of the preceding claims, wherein the weight ratio of sunflower protein to the at least one other vegetable protein in the mixture is between 95 - 5 to 5 - 95 preferably between 80 - 20 to 20 - 80, most preferably between 75 - 25 to 25 - 75.

4. Process as claimed in any one of the preceding claims, wherein the hydrolysed vegetable protein has a dry matter content by weight of at least 20%, preferably between 30 and 99.5%.

5. Process as claimed in any one of the preceding claims, wherein the hydrolysis is non-enzymatic.

6. Process as claimed in any one of the preceding claims, wherein the hydrolysis is acid hydrolysis.

7. Process as claimed in any one of the preceding claims, wherein the source of the sunflower protein is defatted sunflower seeds.

8. Process as claimed in Claim 7, wherein the protein content of the sunflower seeds is greater than 20%, preferably between 25 and 50% most preferably between 30 and 40% by weight.

9. Process as claimed in any one of the preceding claims, wherein the level of MCDP is less than 50 ppb, preferably less than 20 ppb.

10. Process as claimed in any one of the preceding claims, wherein the hydrolysed vegetable protein is in the form of a powder or a paste or a liquid.

11. Process as claimed in any one of the preceding claims, wherein the weight ratio of sunflower protein to the at least one other vegetable protein in the mixture is from 3:1 to 1:1.

## Patentansprüche

1. Prozess zum Herstellen eines hydrolysierten Pflanzenproteins mit einem Unterwerfen einer Mischung, die Sonnenblumenprotein und mindestens ein anderes Pflanzenprotein aufweist, unter eine Hydrolyse, wobei das mindestens eine andere Pflanzenprotein Maisprotein, Rapsprotein oder eine Mischung davon aufweist.

2. Prozess wie in Anspruch 1 beansprucht, wobei die Mischung Sonnenblumenprotein und Maisprotein aufweist.

3. Prozess wie in einem der vorhergehenden Ansprüche beansprucht, wobei das Gewichtsverhältnis von Sonnenblumenprotein zu dem mindestens einen anderen Pflanzenprotein in der Mischung zwischen 95-5 bis 5-95, vorzugsweise zwischen 80-20 bis 20-80, am meisten bevorzugt zwischen 75-25 bis 25-75 beträgt.

4. Prozess wie in einem der vorhergehenden Ansprüche beansprucht, wobei das hydrolysierte Pflanzenprotein einen Trockensubstanzgehalt bezogen auf das Gewicht von mindestens 20 %, vorzugsweise zwischen 30 und 99,5 % aufweist.

5. Prozess wie in einem der vorhergehenden Ansprüche beansprucht, wobei die Hydrolyse nicht-enzymatisch ist.

6. Prozess wie in einem der vorhergehenden Ansprüche beansprucht, wobei die Hydrolyse eine saure Hydrolyse ist.

7. Prozess wie in einem der vorhergehenden Ansprüche beansprucht, wobei die Quelle des Sonnenblumenproteins entfettete Sonnenblumenkerne sind.

8. Prozess wie in Anspruch 7 beansprucht, wobei der Proteingehalt der Sonnenblumenkerne bezogen auf das Gewicht größer als 20 %, vorzugsweise zwischen 25 und 50 %, am meisten bevorzugt zwischen 30 und 40 % ist.

9. Prozess wie in einem der vorhergehenden Ansprüche beansprucht, wobei das Niveau an MCDP kleiner als 50 ppb, vorzugsweise kleiner als 20 ppb ist.

10. Prozess wie in einem der vorhergehenden Ansprüche beansprucht, wobei das hydrolysierte Pflanzenprotein die Form eines Pulvers oder einer Paste oder einer Flüssigkeit hat.

11. Prozess wie in einem der vorhergehenden Ansprüche beansprucht, wobei das Gewichtsverhältnis von Sonnenblumenprotein zu dem mindestens einen anderen Pflanzenprotein in der Mischung von 3:1 bis 1:1 ist.

## Revendications

1. Procédé de production d'une protéine végétale hydrolysée comprenant le fait de soumettre un mélange comprenant une protéine de tournesol et au moins une autre protéine végétale à une hydrolyse, dans lequel la au moins une autre protéine végétale comprend une protéine de maïs, une protéine de colza ou un mélange de celles-ci.

2. Procédé selon la revendication 1, dans lequel le mélange comprend une protéine de tournesol et une protéine de maïs.

3. Procédé selon l'une quelconque des revendications précédentes, dans lequel le rapport en poids entre la protéine de tournesol et la au moins une autre protéine végétale dans le mélange est entre 95 - 5 et 5 - 95, de préférence entre 80 - 20 et 20 - 80, de manière préférée entre toutes entre 75 - 25 et 25 - 75.

4. Procédé selon l'une quelconque des revendications précédentes, dans lequel la protéine végétale hydrolysée a une teneur en matière sèche en poids d'au moins 20 %, de préférence entre 30 et 99,5 %.

5. Procédé selon l'une quelconque des revendications précédentes, dans lequel l'hydrolyse est non enzymatique.

6. Procédé selon l'une quelconque des revendications précédentes, dans lequel l'hydrolyse est une hydrolyse acide.

7. Procédé selon l'une quelconque des revendications précédentes, dans lequel la source de la protéine de tournesol ce sont des graines de tournesol dégraissées.

8. Procédé selon la revendication 7, dans lequel la teneur en protéine des graines de tournesol est supérieure à 20 %, de préférence entre 25 et 50 %, de manière préférée entre toutes entre 30 et 40 % en poids.

9. Procédé selon l'une quelconque des revendications précédentes, dans lequel le taux de MCDP est inférieur à 50 ppb, de préférence inférieur à 20 ppb.

10. Procédé selon l'une quelconque des revendications précédentes, dans lequel la protéine végétale hydrolysée est sous la forme d'une poudre ou d'une pâte ou d'un liquide.

11. Procédé selon l'une quelconque des revendications précédentes, dans lequel le rapport en poids entre la protéine de tournesol et la au moins une autre protéine végétale dans le mélange est de 3 : 1 à 1 : 1.
